# EUROPÄISCHE PATENTSCHRIFT

(11) **EP 3 218 663 B1**
(45) Veröffentlichungstag und Bekanntmachung des Hinweises auf die Patenterteilung: **24.07.2019**
(21) Anmeldenummer: 15828812.6
(22) Anmeldetag: 11.11.2015
(51) Int. Cl.: F28D 11/02

(54) **ROTATIONSWÄRMETAUSCHEREINRICHTUNG**
ROTARY HEAT EXCHANGER DEVICE
DISPOSITIF ÉCHANGEUR DE CHALEUR ROTATIF

(30) Priorität: 12.11.2014 DE 202014105449 U
(43) Veröffentlichungstag der Anmeldung: 20.09.2017
(73) Patentinhaber: tbm GmbH, 84155 Bodenkirchen (DE); Brandmeier, Thomas, 84155 Bodenkirchen (DE)
(72) Erfinder: BRANDMEIER, Thomas, 84155 Bodenkirchen (DE)
(74) Vertreter: Epping - Hermann - Fischer
(86) Internationale Anmeldenummer: PCT/DE2015/000537
(87) Internationale Veröffentlichungsnummer: WO 2016/074660

(56) Entgegenhaltungen:
- WO-A1-01/71260
- WO-A1-2012/032422
- DE-A1-102008 059 171
- DE-U1-202009 009 697

## Beschreibung

Die Erfindung betrifft eine Rotationswärmetauschereinrichtung, insbesondere zur Verwendung in einer dezentralen Raumlüftungsvorrichtung mit Wärmerückgewinnung, mit einem Rotationswärmetauscher und einem Antriebsmotor.

Eine solche Rotationswärmetauschereinrichtung ist aus der DE 20 2009 009 697 U1 bekannt. Bei dieser Rotationswärmetauschereinrichtung ist der Antriebsmotor ein Außenläufermotor, der benachbart zur Außenwand des Rotationswärmetauschers angeordnet ist und dessen Rotor den Rotationswärmetauscher mittels direktem Form- und/oder Reibschluss mit der Außenwand unmittelbar antreibt.

Die Kopplung zwischen Außenwand des Rotationswärmetauschers und Rotor mittels Form- und/oder Reibschluss erfordert eine hohe Positionsgenauigkeit von Antriebsmotor und Rotationswärmetauscher zueinander und damit einen hohen Montageaufwand. Zudem besteht bereits bei geringem Verschleiß die Gefahr, dass die Kopplung nicht mehr zuverlässig funktioniert.

Der vorliegenden Erfindung liegt die Aufgabe zugrunde, eine demgegenüber verbesserte Rotationswärmetauschereinrichtung bereitzustellen, die insbesondere einen verringerten Montageaufwand erfordert und eine erhöhte Zuverlässigkeit aufweist.

Diese Aufgabe wird bei einer Rotationswärmetauschereinheit gemäß dem Oberbegriff des Schutzanspruchs 1 dadurch gelöst, dass der Antriebsmotor an der Drehachse des Rotationswärmetauschers angeordnet ist und der Rotor des Antriebsmotors fest mit dem Rotationswärmetauscher verbunden ist.

Besonders bevorzugt sind die Rotor-Drehachse und die Wärmetauscher-Drehachse koaxial.

Der Antriebsmotor befindet sich vorzugsweise innerhalb des Rotationswärmetauschers und der Rotor ist dabei vorzugsweise direkt an eine Innenfläche des Rotationswärmetauschers gekoppelt. Alternativ ist der Rotor fest mit einer Drehachse des Rotationswärmetauschers verbunden, an der dieser befestigt ist.

Vorliegend ist mit Rotor immer der Teil des Antriebsmotors gemeint, der fest mit dem Rotationswärmetauscher verbunden ist und diesen dreht. Demgegenüber ist mit Stator der Teil des Antriebsmotors gemeint, der fest mit dem Gehäuse verbunden ist.

Der Antriebsmotor ist mit Vorteil derart angeordnet, dass die Drehachse des Rotationswärmetauschers und die Drehachse des Rotors des Antriebsmotors koaxial sind und der Rotor fest mit dem Rotationswärmetauscher verbunden ist und diesen im Betrieb mit der gewünschten Drehzahl um seine Drehachse dreht. Der Antriebsmotor ist dabei derart konzipiert, vorzugsweise vermittels einer geeigneten Steuerelektronik bzw. -software, dass der Rotor mit der für den Rotationswärmetauscher gewünschten Drehzahl rotiert. Ein Getriebe ist vorteilhafterweise nicht erforderlich.

Eine derartige Rotationswärmetauschereinrichtung bringt insbesondere auch den Vorteil mit sich, dass keine verschleißanfälligen Kopplungsmittel wie Antriebsriemen oder Zahnräder oder andere Mittel zur Herstellung eines Form- oder Reibschlusses zwischen Rotor und Rotationswärmetauscher erforderlich sind. Sie erspart ein kompliziertes Justieren und Nachstellen von Kopplungsmittel und/oder Antriebsmotor.

Dadurch, dass der Antriebsmotor nicht mehr benachbart zur Außenwand des Rotationswärmetauschers angeordnet ist, kann dessen Durchmesser bei gleichbleibender Größe eines Gehäuses der Rotationswärmetauschereinrichtung vergrößert werden, was bei gleicher Luftleistung eine höhere Wärmerückgewinnung und einen geringeren Druckverlust mit sich bringt.

Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen, deren Offenbarungsgehalt ebenso wie der Offenbarungsgehalt des Schutzanspruches 1 hiermit in die Beschreibung aufgenommen wird.

Es zeigen:
Fig. 1 eine schematische Darstellung eines Querschnitts parallel zur Drehachse eines ersten Ausführungsbeispiels,
Fig. 2 eine schematische Darstellung eines Querschnitts parallel zur Drehachse eines zweiten Ausführungsbeispiels und
Fig. 3 eine schematische Darstellung eines Querschnitts parallel zur Drehachse eines dritten Ausführungsbeispiels.

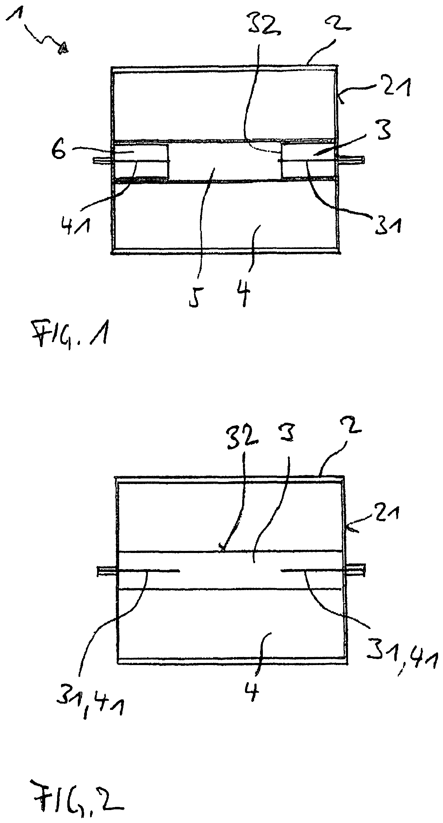

Die Figuren 1 bis 3 zeigen jeweils ein Ausführungsbeispiel einer Rotationswärmetauschereinrichtung 1 mit einem beispielsweise kubischen Gehäuse 2 beispielsweise aus Blech oder Kunststoff, einem elektrischen Antriebsmotor 3 und einem zylinderförmigen Rotationswärmetauscher 4. Das Gehäuse 2 weist seitlich Öffnungen (nicht gezeigt) für Lufteintritt in den und Luftaustritt aus dem Rotationswärmetauscher 4 auf.

Bei den Ausführungsbeispielen gemäß den Figuren 1 und 2 ist der Antriebsmotor 3 innerhalb des Rotationswärmetauschers 4 angeordnet, derart, dass die Drehachse des Rotors 32 des Antriebsmotors 3, sprich die Motor-Drehachse 31, koaxial mit einer Drehachse des Rotationswärmetauschers 4, im Folgenden Wärmetauscher-Drehachse 41, ist.

Der Rotor 32 ist fest mit dem Rotationswärmetauscher 4 verbunden, beispielsweise mittels einer Verzahnung oder einer Verschraubung zwischen Rotationswärmetauscher 4 und Rotor 32.

Ein Stator (nicht gezeigt) des Antriebsmotors 3 ist fest mit einer Seitenwand 21 des Gehäuses 2 verbunden, beispielsweise mittels einer geeigneten Schraubverbindung.

Auf der dem Antriebsmotor 3 gegenüberliegenden Seite der Hülse 5 ist in diese zur drehbaren Lagerung des Rotationswärmetauschers 4 ein Kugellager 6 angeordnet, welches am Gehäuse 2 befestigt ist.

Die Drehzahl des Antriebsmotors 3 und damit des Rotationswärmetauschers 4 wird im Betrieb der Rotationswärmetauschereinrichtung vermittels einer geeigneten Steuerelektronik (nicht gezeigt) und -software vorgegeben.

Der Unterschied zwischen dem ersten und dem zweiten Ausführungsbeispiel besteht darin, dass
- im ersten Ausführungsbeispiel gemäß Figur 1 die Rotorspeichermasse des Rotationswärmetauschers 4 auf einer bevorzugt zylindrischen Hülse angeordnet ist, in die der Antriebsmotor 3 eingeschoben ist und die mit dessen Rotor 32 wie oben beschrieben fest verbunden ist, und
- im zweiten Ausführungsbeispiel gemäß Figur 2 die Rotorspeichermasse des Rotationswärmetauschers 4 direkt auf einem Trägerelement angeordnet ist, das Teil des Rotors 32 des Antriebsmotors 3 ist.

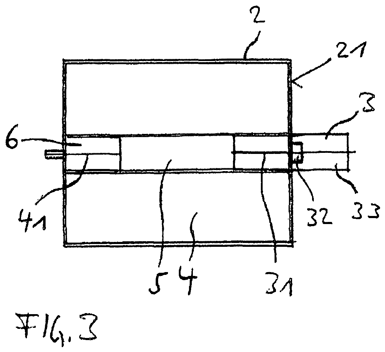

Das dritte Ausführungsbeispiel gemäß Figur 3 unterscheidet sich von den beiden vorgenannten Ausführungsbeispielen dadurch, dass der Antriebsmotor 3 außerhalb des Gehäuses 2 angeordnet ist und dessen Rotor 32 über geeignete Verbindungsmittel durch die Seitenwand 21 des Gehäuses hindurch mit dem Rotationswärmetauscher 4 verbunden ist.

Prinzipiell geeignete Rotorspeichermassen bzw. Rotationswärmetauscher und deren Funktionsprinzip sind beispielsweise beschrieben unter:
http://www.lautner.eu/rotorsysteme/waermerueckgewinnung-mitrotorsystemen/funktionsprinzip.html
http://www.lautner.eu/rotorsysteme/waermerueckgewinnung-mitrotorsystemen/technische-beschreibung.html
http://www.lautner.eu/rotorsysteme/geraetebeschreibungen/rotorbaua rt.html
http://www.lautner.eu/rotorsysteme/geraetebeschreibungen/rotortype n.html
Bei allen Ausführungsbeispielen kann der Antriebsmotor in der Bauform als Außenläufer oder Innenläufer ausgeführt sein.

Die Erfindung ist nicht auf die dargestellten und beschriebenen Ausführungsbeispiele beschränkt, sondern umfasst alle im Sinne der Erfindung ausgestalteten und wirkenden Ausführungsformen gemäss den Ansprüchen.

### Bezugszeichenliste

- 1: Rotationswärmetauschereinrichtung
- 2: Gehäuse
- 21: Seitenwand des Gehäuses
- 3: Antriebsmotor
- 31: Motor-Drehachse
- 32: Rotor
- 33: Stator
- 4: Rotationswärmetauscher
- 41: Wärmetauscher-Drehachse
- 5: Trägerhülse
- 6: Kugellager

## Patentansprüche

1. Rotationswärmetauschereinrichtung (1), insbesondere zur Verwendung in einer dezentralen Raumlüftungsvorrichtung mit Wärmerückgewinnung, mit einem Rotationswärmetauscher (4) mit einer Wärmetauscher-Drehachse (41), einem Antriebsmotor (3) mit einem Stator (33) und einem Rotor (32) mit einer Rotor-Drehachse (31) und mit einem Gehäuse (2), in das der Rotationswärmetauscher (4) eingebaut ist und in dem dieser rotiert, **dadurch gekennzeichnet, dass** die Rotor-Drehachse (31) und die Wärmetauscher-Drehachse (41) koaxial verlaufen und der Rotor (32) fest mit dem Rotationswärmetauscher (4) verbunden ist.

2. Rotationswärmetauschereinrichtung nach Anspruch 1, **dadurch gekennzeichnet, dass** der Antriebsmotor (3) zumindest teilweise innerhalb des Rotationswärmetauschers (4) angeordnet und der Stator (33) fest mit dem Gehäuse (2) und der Rotor (32) fest mit dem Rotationswärmetauscher (4) verbunden ist.

3. Rotationswärmetauschereinrichtung nach Anspruch 2, **dadurch gekennzeichnet, dass** der Antriebsmotor (3) zumindest teilweise in einer Trägerhülse (5) des Rotationswärmetauschers (4) angeordnet ist und der Rotor (32) mit der Trägerhülse (5) fest verbunden ist.

4. Rotationswärmetauschereinrichtung nach Anspruch 2, **dadurch gekennzeichnet, dass** eine Rotorspeichermasse des Rotationswärmetauschers (4) direkt auf einer Trägerhülse des Rotors (32) des Antriebsmotors (3) angeordnet ist.

5. Rotationswärmetauschereinrichtung nach Anspruch 1, **dadurch gekennzeichnet, dass** der Antriebsmotor (3) außerhalb des Gehäuses (2) angeordnet ist und der Rotor (32) über geeignete Verbindungsmittel durch eine Seitenwand (21) des Gehäuses (2) hindurch mit dem Rotationswärmetauscher (4) verbunden ist.

## Claims

1. Rotary heat exchanger device (1), in particular for use in a decentralized room ventilation device having heat recovery, comprising a rotary heat exchanger (4) having a heat exchanger rotary axis (41), a drive motor (3) having a stator (33) and a rotor (32) having a rotor rotary axis (31) and having a housing (2), in which the rotary heat exchanger (4) is installed and in which this exchanger rotates, **characterized in that** the rotor rotary axis (31) and the heat exchanger rotary axis (41) extend coaxially and the rotor (32) is fixedly connected to the rotary heat exchanger (4).

2. Rotary heat exchanger device according to claim 1, **characterized in that** the drive motor (3) is at least partially arranged within the rotary heat exchanger (4) and the stator (33) is fixedly connected to the housing (2) and the rotor (32) is fixedly connected to the rotary heat exchanger (4).

3. Rotary heat exchanger device according to claim 2, **characterized in that** the drive motor (3) is arranged at least partially in a carrier sleeve (5) of the rotary heat exchanger (4) and the rotor (32) is fixedly connected to the carrier sleeve (5).

4. Rotary heat exchanger device according to claim 2, **characterized in that** a rotor storage mass of the rotary heat exchanger (4) is arranged directly on a support sleeve of the rotor (32) of the drive motor (3).

5. Rotary heat exchanger device according to claim 1, **characterized in that** the drive motor (3) is arranged outside the housing (2) and the rotor (32) is connected to the rotary heat exchanger (4) via suitable connecting means through a side wall (21) of the housing (2).

## Revendications

1. Dispositif échangeur de chaleur rotatif (1), en particulier destiné à être utilisé dans un dispositif de ventilation de locaux décentralisé avec récupération de chaleur, comprenant un échangeur de chaleur rotatif (4) ayant un axe de rotation d'échangeur de chaleur (41), un moteur d'entraînement (3) doté d'un stator (33) et d'un rotor (32) ayant un axe de rotation de rotor (31), et un carter (2), dans lequel l'échangeur de chaleur rotatif (4) est monté et dans lequel il tourne, **caractérisé en ce que** l'axe de rotation de rotor (31) et l'axe de rotation d'échangeur de chaleur (41) s'étendent de manière coaxiale et le rotor (32) est assemblé solidement avec l'échangeur de chaleur rotatif (4).

2. Dispositif échangeur de chaleur rotatif selon la revendication 1, **caractérisé en ce que** le moteur d'entraînement (3) est disposé au moins en partie à l'intérieur de l'échangeur de chaleur rotatif (4), et le stator (22) est assemblé solidement avec le carter (2) et le rotor (32) est assemblé solidement avec l'échangeur de chaleur rotatif (4).

3. Dispositif échangeur de chaleur rotatif selon la revendication 2, **caractérisé en ce que** le moteur d'entraînement (3) est disposé au moins en partie dans un manchon porteur (5) de l'échangeur de chaleur rotatif (4) et le rotor (32) est assemblé solidement avec le manchon porteur (5).

4. Dispositif échangeur de chaleur rotatif selon la revendication 2, **caractérisé en ce qu'**une masse d'accumulation du rotor de l'échangeur de chaleur rotatif (4) est disposée directement sur un manchon porteur du rotor (32) du moteur d'entraînement (3).

5. Dispositif échangeur de chaleur rotatif selon la revendication 1, **caractérisé en ce que** le moteur d'entraînement (3) est disposé en dehors du carter (2) et le rotor (32) est relié à l'échangeur de chaleur rotatif (4) à travers une paroi latérale (21) du carter (2) par des moyens de liaison appropriés.
